# EUROPEAN PATENT SPECIFICATION

(11) **EP 1 258 384 B1**
(45) Date of publication and mention of the grant of the patent: **12.07.2006**
(21) Application number: 02011039.1
(22) Date of filing: 17.05.2002
(51) Int. Cl.: B60K 37/02, B21D 35/00, G01D 13/04

(54) **Method for production of a three-dimensional dashboard cluster for vehicles**
Verfahren zur Herstellung einer dreidimensionalen Armaturenbrett- Anzeigegruppe für Fahrzeuge
Procédé de production d'un groupe d'afficheurs de tableau de bord tridimensionel pour véhicule

(30) Priority: 18.05.2001 IT TO20010467
(43) Date of publication of application: 20.11.2002
(73) Proprietor: MAGNETI MARELLI SISTEMI ELETTRONICI S.p.A., 20011 Corbetta (Milano) (IT)
(72) Inventor: Cairati, Maurizio, 20010 Ossona (IT); Galimberti, Luigi, 20010 Bareggio (IT); Suigo, Ezio, 21040 Cislago (IT)
(74) Representative: Jorio, Paolo

(56) References cited:
- EP-A- 0 865 895
- DE-A- 4 339 909
- DE-A- 19 513 024

## Description

The present invention concerns a method for production of a three-dimensional dashboard cluster for vehicles, in particular motor vehicles.

Three-dimensional type dashboard clusters are known in which a number of flat pressed elements, for example corresponding to on-board instrument dials, are applied, for example by means of gluing, on a flat element acting as background and support. In this way a three-dimensional type dashboard cluster is produced, i.e. consisting of several elements frontally defined by respective surfaces on different planes. A such dashboard cluster is known from DE-A-4339909.

The production methods of said dashboard clusters are, however, complex, costly and time consuming and result in dashboard clusters with poor mechanical solidity.

The aim of the present invention is to provide a method for producing a dashboard cluster which is extremely simple and effective.

The above aim is achieved by the present invention, since it concerns a method for production of a three-dimensional dashboard cluster for vehicles, in particular motor vehicles, of the type described in claim 1.

The invention will now be described with particular reference to the attached drawings which represent a preferred example of non-restrictive embodiment in which:
- figure 1 illustrates a first phase of the method of the present invention;
- figure 2 illustrates a second phase of the method of the present invention;
- figure 3 illustrates, schematically, a press performing the third phase of the met hod according to the present invention; and
- figure 4 illustrates, in perspective, a dashboard cluster produced according to the method of the present invention.

In particular, to produce the dashboard cluster according to the present invention, a flat panel 2 is used made of plastic, in particular polycarbonate.

The method according to the present invention comprises the following phases:
- a preparatory phase;
- a punching phase;
- a pressing phase;
- an injection phase; and
- a phase in which the press is opened and the finished dashboard cluster is removed.

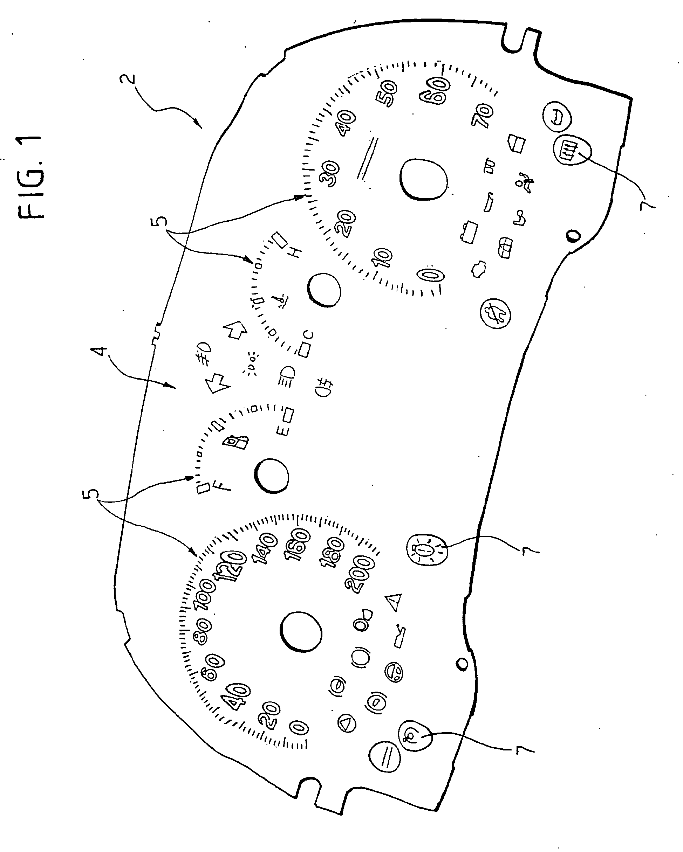

In the preparatory phase a number of marks are made on the panel 2 (figure 1). These marks are made by means of known techniques, for example screen-printing, using varnishes and colours. The example illustrated shows production of a uniform colour background 4, instrument dials 5 (for example a speedometer, a rev counter, a fuel gauge and a water temperature gauge) and a number of lights 7 (for example direction indicators, sidelights, dipped headlights, full headlights etc.).

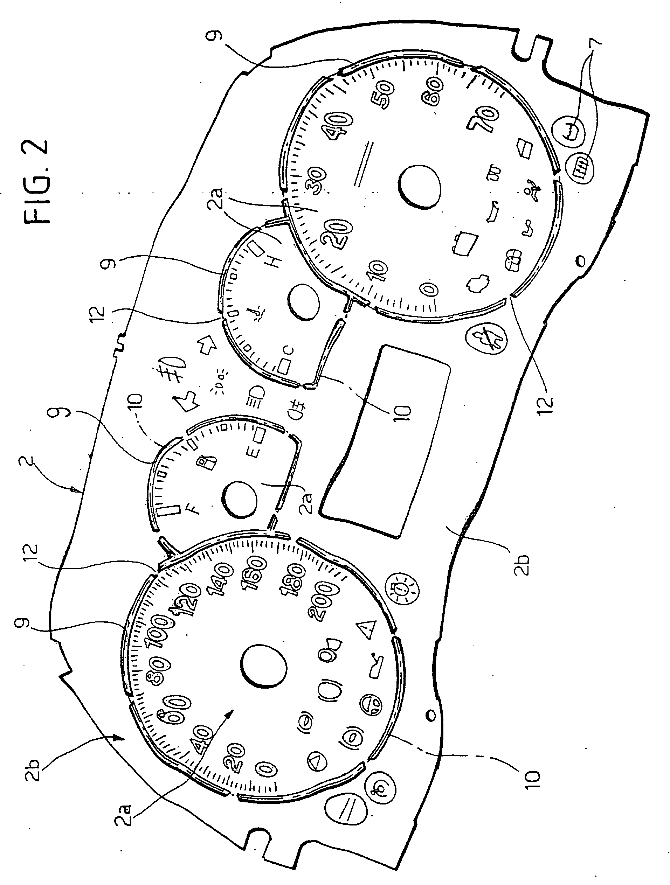

In the punching phase (figure 2) a number of slots 9 are made on the panel 2; these slots 9 cover closed sections 10 and define first flat parts 2a of the panel which are connected to second flat parts 2b adjacent to them by means of a number of bridge elements 12 (triangular-shaped in the embodiment example illustrated) defined by non-punched areas of the panel 2 arranged between adjacent end parts of pairs of slots 9.

In the embodiment example illustrated, a number of slots 9 arranged in a circular pattern 10 define flat parts 2a corresponding to the speedometer dial and rev counter dial while a number of slots 9 arranged in a substantially semicircular pattern 10 define flat parts 2a corresponding to the fuel gauge and water temperature gauge.

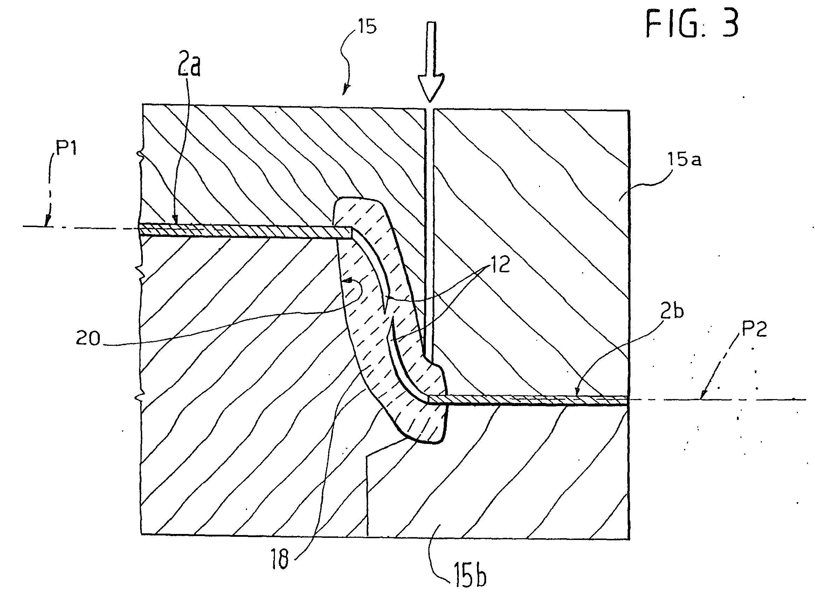

In the pressing phase (figure 3) the punched panel 2 is positioned in a press 15 (illustrated schematically) which, when it closes, displaces the first flat parts 2a to a first plane P1 and the second flat parts 2b to a second plane P2 distinct and separate from the first one, preferably parallel to the latter.

It is obviously possible to arrange the parts 2a and 2b on more than two planes, for example parts 2b on plane P2 and the first parts 2a (for example corresponding to the fuel and water temperature indicators) on a second plane P1a (not illustrated) and the second parts 2a (for example corresponding to the speedometer and rev counter) on a third plane P1b (not illustrated) separate from and parallel to planes P2, P1a and P1b.

During the pressing operations the bridge elements 12 plastically deform and normally separate. The bridge elements 12 (or part of them) can also lengthen and become thinner without separating.

In the injection phase, plastic material 18 is injected into the ring areas near the facing end edges of parts 2a and 2b.

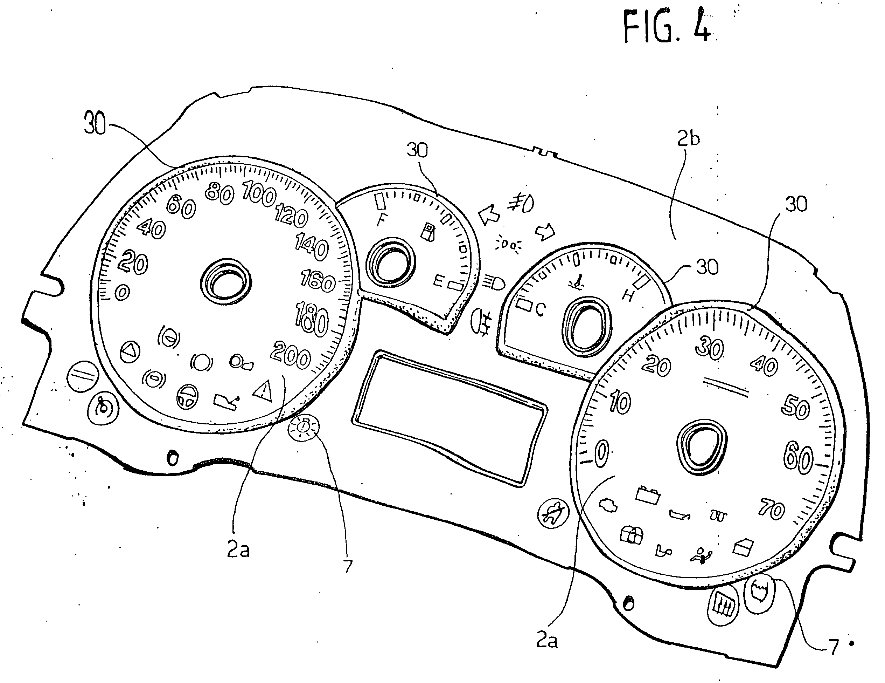

In particular, to perform the above injection phase operations, the press 1b comprises a first die 15a and a second die 15bwhich, when set to the closed position, form ring cavities 20 which house the separated and/or deformed bridge elements and end edges of the parts 2a and 2b. The plastic material 18 is injected into said ring cavities 20 producing, as it hardens, ring surrounds 30 (figure 4) which permanently connect parts 2a and 2b, incorporating the separated and/or deformed bridge elements 12.

The press opening phase 15 is performed after complete hardening of the plastic 18; in this phase the dies 15a and 15b are moved away from each other and the finished dashboard cluster is taken out of the press.

The finished dashboard cluster comprises a flat part 2b (figure 4) corresponding to the background and positioned on a first plane, and a number of flat parts 2a (four in the example illustrated) positioned on different planes to the first, in particular positioned on a second plane parallel to and separate from the first plane. The parts 2a are furthermore joined to the part 2b by means of the surrounds 30 between the two planes.

The three-dimensional dashboard cluster is therefore produced by means of a simple quick procedure and without the use of accessory parts; said cluster features a three-dimensional structure, is attractively designed and is mechanically very sturdy.

Finally, it is clear that modifications and variations can be made to the dashboard cluster described while remaining within the scope of the present invention.

## Claims

1. Method for the production of a three-dimensional dashboard cluster for vehicles, in particular motor vehicles, comprising the following phases:
- a preparatory phase in which a number of marks (5) are made on a panel (2) ;
- a punching phase in which a number of slots (9) are made on the panel (2); said slots (9) cover closed sections (10) and define first parts (2a) of the panel connected to second parts (2b) adjacent to them via a number of bridge elements (12) defined by non-punched areas of the panel (2) arranged between adjacent end parts of pairs of slots (9);
- a pressing phase in which the punched panel (2) is deformed, displacing the first parts (2a) on a first plane (P1) and the second parts (2b) on at least one second plane (P2) distinct and separate from the first one, preferably parallel to the first plane; during the pressing operations the bridge elements (12) plastically deform and/or separate;
- an injection phase in which plastic material (18) is injected in the ring areas near the facing end edges of the first and second parts (2a, 2b); as it hardens, the plastic material (18) forms ring surrounds (30) which permanently connect the first and second parts (2a, 2b) incorporating the bridge elements (12); and
- withdrawal of the finished dashboard cluster which comprises the first and second parts (2a, 2b) positioned on at least two different planes and permanently connected by said ring surrounds (30).

2. Method according to claim 1, in which said preparatory phase comprises a process of colour screen-printing to produce said marks (5).

3. Method according to claim 1 or 2, in which in said preparatory phase a uniform colour background (4), instrument dials (5) and a number of lights (7) are provided on said panel.

4. Method according to any of the previous claims, in which said bridge elements (12) are made in a triangular shape.

5. Method according to any of the previous claims, in which said slots (9) covering a closed section (10) define first parts (2a) corresponding to instrument dials.

6. Method according to any of the previous claims, in which said pressing phase is performed in a press via the movement of a first and/or second die (15a, 15b) towards the closed position.

7. Method according to claim 6, in which the first die (15a) and the second die (15b), when set to the closed position, form ring cavities (20) which house the bridge elements (12) and end edges of the first and second parts (2a and 2b).

8. Method according to any of the previous claims, in which in said pressing phase the first parts (2a) and second parts (2b) are positioned on more than two planes.

## Patentansprüche

1. Verfahren zur Produktion einer dreidimensionalen Armaturenbrettgruppe für Fahrzeuge, insbesondere Motorfahrzeuge, mit den folgenden Phasen:
- einer Präparationsphase, in welcher eine Anzahl von Markierungen (5) auf einer Paneele (2) gemacht werden;
- einer Stanzphase, in welcher eine Anzahl von Schlitzen (9) auf der Paneele (2) ausgebildet werden; wobei die Schlitze (9) geschlossene Abschnitte (10) überdecken und erste Partien (2a) der Paneele begrenzen, die mit zweiten Partien (2b) angrenzend an diese über eine Anzahl von Brückenelementen (12) verbunden sind, die durch nicht gestanzte Bereiche der Paneele (2) gebildet werden, welche zwischen benachbarten Endstücken von Paaren von Schlitzen (9) angeordnet sind;
- einer Pressphase, in welcher die gestanzte Paneele (2) verformt wird, wodurch die ersten Partien (2a) auf der ersten Ebene (P1) und die zweiten Partien (2b) auf wenigstens einer zweiten Ebene (P2), die getrennt und separat von der ersten, vorzugsweise parallel zu der ersten Ebene ist, verlagert werden; wobei sich die Brückenelemente (12) während der Pressvorgänge plastisch verformen und/oder separieren;
- einer Injektionsphase, in welcher Kunststoffmaterial (18) in die Ringbereiche nahe der gegenüber liegenden Endkanten der ersten und zweiten Partien (2a, 2b) eingespritzt wird; wenn dieses aushärtet, das Kunststoffmaterial (18) Ringeinfassungen (30) bildet, welche die ersten und zweiten Partien (2a, 2b) dauerhaft verbinden und die Brückenelemente (12) in sich aufnehmen; und
- Entnahme der fertigen Armaturenbrettgruppe, welche die ersten und zweiten Partien (2a, 2b) umfasst, die auf wenigstens zwei unterschiedlichen Ebenen und dauerhaft durch die Ringeinfassungen (30) verbunden.

2. Verfahren nach Anspruch 1, in welchem die Präparationsphase einen Prozess des Farbsiebdrucks umfasst, um die Markierungen (5) zu erzeugen.

3. Verfahren nach Anspruch 1 oder 2, in welchem in der Präparationsphase ein einfarbiger Hintergrund (4), Instrumentenanzeigen (5) und eine Anzahl von Lichtern (7) auf dem Feld geschaffen werden.

4. Verfahren nach einem der vorstehenden Ansprüche, in welchem die Brückenelemente (12) in einer dreieckigen Form hergestellt werden.

5. Verfahren nach einem der vorstehenden Ansprüche, in welchem die Schlitze (9),welche einen geschlossenen Abschnitt (10) überdecken, erste Partien (2a) entsprechend den Instrumentenanzeigen begrenzen.

6. Verfahren nach einem der vorstehenden Ansprüche, in welchem die Pressphase in einer Presse durch die Bewegung einer ersten und/oder zweiten Pressform (15a, 15b) in die Schließstellung durchgeführt wird.

7. Verfahren nach Anspruch 6, in welchem die erste Pressform (15a) und die zweite Pressform (15b) Ringräume (20) bilden, wenn sie in die Schließstellung gebracht sind, welche die Brückenelemente (12) und Endkanten der ersten und zweiten Partien (2a und 2b) aufnehmen.

8. Verfahren nach einem der vorstehenden Ansprüche, in welchem in der Pressphase die ersten Partien (2a) und die zweiten Partien (2b) auf mehr als zwei Ebenen positioniert werden.

## Revendications

1. Procédé pour la production d'un groupe d'afficheurs de tableau de bord tridimensionnel pour véhicules, en particulier pour des véhicules à moteur, comprenant les phases suivantes :
- une phase préparatoire dans laquelle un nombre de marques (5) sont faites sur un panneau (2) ;
- une phase de matriçage dans laquelle un nombre de fentes (9) sont faites sur le panneau (2) ; lesdites fentes (9) couvrent des sections fermées (10) et définissent des premières parties (2a) du panneau connectées aux secondes parties (2b) adjacentes à elles via un nombre d'éléments de pont (12) définis par des zones non matricées du panneau (2) disposées entre des parties d'extrémité des paires de fentes (9) ;
- une phase de pressage dans laquelle le panneau matricé (2) est déformé, déplaçant les premières parties (2a) sur un premier plan (P1) et les secondes parties (2b) sur au moins un second plan (P2) distinct et séparé du premier, préférablement parallèle au premier plan ; pendant les opérations de pressage, les éléments de pont (12) se déforment plastiquement et/ou se séparent ;
- une phase d'injection dans laquelle le matériau en plastique (18) est injecté dans des zones annulaires près des bords d'extrémité en regard des premières et secondes parties (2a, 2b) ; quand il durcit, le matériau en plastique (18) forme des bordures annulaires (30) qui relient de façon permanente les première et second parties (2a, 2b) incorporant les éléments de pont (12) ; et
- retrait du groupe d'afficheurs de tableau de bord fini qui comprend les première et seconde parties (2a, 2b) positionnées sur au moins deux plans différents et raccordées de façon permanente par lesdits bordures annulaires (30).

2. Procédé selon la revendication 1, dans lequel ladite phase préparatoire comprend un traitement de sérigraphie en couleur pour produire lesdites marques (5).

3. Procédé selon la revendication 1 ou 2, dans lequel dans ladite phase préparatoire, un arrière-plan de couleur uniforme (4), des cadrans d'instrument (5) et un nombre de voyants (7) sont placés sur ledit panneau.

4. Procédé selon l'une quelconque des revendications précédentes, dans lequel lesdits éléments de pont (12) sont faits dans une forme triangulaire.

5. Procédé selon l'une quelconque des revendications précédentes, dans lequel lesdites fentes (9) couvrant une section fermée (10) définissent des premières parties (2a) correspondant aux cadrans d'instrument.

6. Procédé selon l'une quelconque des revendications précédentes, dans lequel ladite phase de pressage est réalisée dans une presse via le déplacement d'un premier et/ou second moule (15a, 15b) vers la position fermée.

7. Procédé selon la revendication 6, dans lequel le premier moule (15a) et le second moule (15b), lorsqu'ils sont mis à la position fermée, forment des cavités annulaires (20) qui contiennent les éléments de pont (12) et des extrémités de bord des première et seconde parties (2a et 2b).

8. Procédé selon l'une quelconque des revendications précédentes, dans lequel dans ladite phase de pressage, les premières parties (2a) et secondes parties (2b) sont positionnées sur plus que deux plans.
